(19) Europäisches Patentamt
European Patent Office
Office européen des brevets

(11) Veröffentlichungsnummer: 0 326 025 A2

# (12) EUROPÄISCHE PATENTANMELDUNG

(21) Anmeldenummer: 89100906.0

(51) Int. Cl.[4]: C09D 11/00

(22) Anmeldetag: 20.01.89

(30) Priorität: 29.01.88 DE 3802615

(43) Veröffentlichungstag der Anmeldung: 02.08.89 Patentblatt 89/31

(84) Benannte Vertragsstaaten: CH DE FR GB IT LI

(71) Anmelder: BASF Aktiengesellschaft
Carl-Bosch-Strasse 38
D-6700 Ludwigshafen(DE)

(72) Erfinder: Mayer, Udo, Dr.
Max-Slevogt-Strasse 27
D-6710 Frankenthal(DE)
Erfinder: Dyllick-Brenzinger, Rainer, Dr.
Weinheimer Strasse 44
D-6940 Weinheim(DE)
Erfinder: Bruder, Horst, Dr.
Dubliner Strasse 25
D-6700 Ludwigshafen(DE)
Erfinder: Bares, Steven J., Dr.
1725 Woodland Drive
Corvallis/Oregon 97330(US)

## (54) Neue Aufzeichnungsflüssigkeit für das Ink-Jet-Verfahren.

(57) Neue Aufzeichnungsflüssigkeit für das Ink-Jet-Verfahren, enthaltend ein mit Wasser mischbares organisches Lösungsmittel und einen Farbstoff der Formel

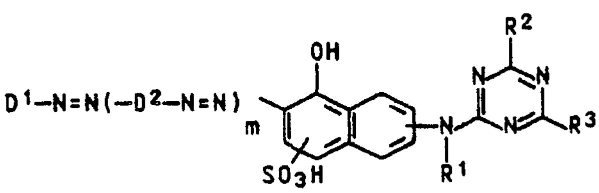

in der

m 0 oder 1,

$D^1$ und $D^2$ unabhängig voneinander den Rest einer Diazokomponente, aus der Anilinreihe,

$R^1$ Wasserstoff oder $C_1$-$C_4$-Alkyl und

$R^2$ und $R^3$ unabhängig voneinander einen Rest mit einer extern basischen Gruppe bedeuten.

EP 0 326 025 A2

## Neue Aufzeichnungsflüssigkeit für das Ink-Jet-Verfahren

Die vorliegende Erfindung betrifft eine neue Aufzeichnungsflüssigkeit für das Ink-Jet-Verfahren, enthaltend ein mit Wasser mischbares organisches Lösungsmittel und einen Mono- oder Disazofarbstoff, dessen Diazokomponente(n) sich von gegebenenfalls substituiertem Anilin und dessen Kupplungskomponente sich von 1-Hydroxynaphthalin-3-sulfonsäure, die über einen Aminotriazinring mit einer externen basischen Gruppe verknüpft ist, ableiten.

Das Ink-Jet-Verfahren ist an sich bekannt. Dabei werden Tröpfchen einer Schreibflüssigkeit aus einer oder mehreren kleinen Düsen gezielt auf einen Träger, z.B. auf Papier, Holz, Textilien, Kunststoff oder Metall, geschossen. Durch elektronische Aussteuerung werden die einzelnen Tröpfchen zu Schriftzeichen oder graphischen Mustern zusammengefaßt.

Für das Ink-Jet-Verfahren geeignete Aufzeichnungsflüssigkeiten enthalten im allgemeinen als Farbmittel in Wasser und/oder organischen Lösungsmitteln lösliche Farbstoffe. Einige dieser Farbstoffe weisen jedoch Mängel in ihren anwendungstechnischen Eigenschaften, z.B. in der Wasserechtheit oder Schmierechtheit, auf.

Aufgabe der vorliegenden Erfindung war es deshalb, eine neue Aufzeichnungsflüssigkeit für das Ink-Jet-Verfahren bereitzustellen, wobei die darin enthaltenden Farbstoffe ein günstiges anwendungstechnisches Eigenschaftsprofil besitzen sollten.

Es wurde eine neue Aufzeichnungsflüssigkeit für das Ink-Jet-Verfahren gefunden, enthaltend Farbstoff und ein mit Wasser mischbares organisches Lösungsmittel, die dadurch gekennzeichnet ist, daß sie einen Farbstoff der Formel I

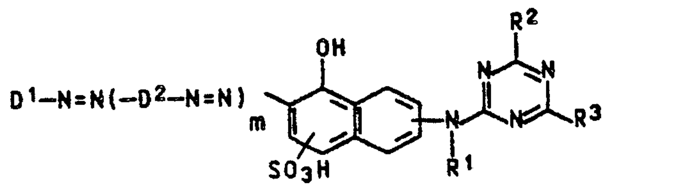

(I)

enthält, in der

m 0 oder 1,

$D^1$ und $D^2$ gleich oder verschieden sind und unabhängig voneinander jeweils den Rest einer Diazokomponente, die sich von gegebenenfalls durch $C_1$-$C_4$-Alkyl, $C_1$-$C_4$-Alkoxy, Phenoxy, Halogen, Nitro, Cyano oder Phenylcarbamoyl substituiertem Anilin ableitet,

$R^1$ Wasserstoff oder $C_1$-$C_4$-Alkyl und

$R^2$ und $R^3$ gleich oder verschieden sind und unabhängig voneinander jeweils einen Rest der Formel II oder III

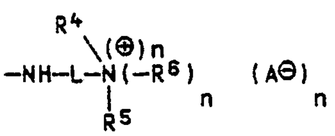

(II)

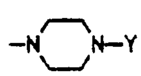

(III)

bedeuten, wobei $A^\ominus$ für ein Anion, L für $C_2$-$C_6$-Alkylen, das gegebenenfalls durch Sauerstoff, Imino oder $C_1$-$C_4$-Alkylimino unterbrochen ist, n für 0 oder 1, $R^4$, $R^5$ und $R^6$ gleich oder verschieden sind und unabhängig voneinander jeweils für Wasserstoff oder $C_1$-$C_4$-Alkyl, das gegebenenfalls durch Hydroxy substituiert ist, oder $R^4$ und $R^5$ zusammen mit dem sie verbindenden Stickstoffatom für Pyrrolidino, Piperidino, Morpholino, Piperazino oder N-($C_1$-$C_4$-Alkyl)piperazino, und Y für Wasserstoff, $C_1$-$C_4$-Alkyl, das gegebenenfalls durch Hydroxy substituiert ist, oder den Rest

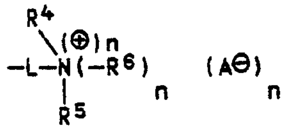

stehen, wobei n, $R^4$, $R^5$, $R^6$ und $A^{\ominus}$ jeweils die obengenannte Bedeutung besitzen.

Alle in der obengenannten Formel auftretenden Alkyl- und Alkylenreste können sowohl geradkettig als auch verzweigt sein.

Wenn die Reste $D^1$ und $D^2$ sich von substituiertem Anilin ableiten, kommen als Substituenten, neben den bereits genannten, z.B. Methyl, Ethyl, Propyl, Isopropyl, Butyl, Isobutyl, sec-Butyl, tert-Butyl, Methoxy, Ethoxy, Propoxy, Isopropoxy, Butoxy oder sec-Butoxy in Betracht.

Die Reste $D^1$ und $D^2$ leiten sich beispielsweise von Anilin, 2-Methylanilin, 3-Methylanilin, 2-Methoxyanilin, 3-Methoxyanilin, 2-Chloranilin, 3-Chloranilin, 2-Nitroanilin, 3-Nitroanilin, 2-Cyanoanilin oder 3-Cyanoanilin ab.

$R^1$, $R^4$, $R^5$, $R^6$ und Y sind beispielsweise Methyl, Ethyl, Propyl, Isopropyl, Butyl, Isobutyl oder sec-Butyl.

$R^4$, $R^5$, $R^6$ und Y sind weiterhin beispielsweise 2-Hydroxyethyl, 2- oder 3-Hydroxypropyl oder 2- oder 4-Hydroxybutyl.

L bedeutet beispielsweise Ethylen, Trimethylen, Tetramethylen, Pentamethylen, Hexamethylen, 1-Methylethylen, 1,2-Dimethylethylen, 2-Methyltrimethylen, 2-Oxatrimethylen, 2-Azatrimethylen, 2-Aza-2-methyltrimethylen, 3-Oxapentamethylen, 3-Azapentamethylen oder 3-Aza-3-methylpentamethylen.

Anionen $A^{\ominus}$ leiten sich von anorganischen oder organischen Säuren ab und sind z.B. Fluorid, Chlorid, Bromid, Hydrogensulfat, Sulfat, Aminosulfat, Methosulfat, Ethosulfat, Perchlorat, Tetrafluoroborat, Trichlorozinkat, Methansulfonat, Benzolsulfonat, p-Toluolsulfonat, Formiat, Acetat, Propionat, Lactat, Benzoat, Oxalat oder Succinat.

Bevorzugt ist eine Aufzeichnungsflüssigkeit, die Farbstoffe der Formel Ia

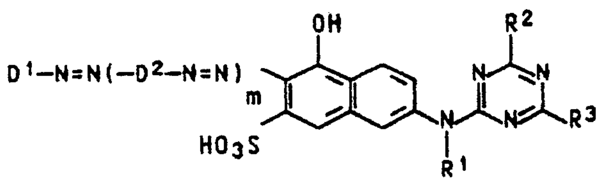

(Ia)

enthält, in der

$D^1$ und $D^2$ gleich oder verschieden sind und unabhängig voneinander jeweils den Rest einer Diazokomponente, die sich von gegebenenfalls durch Methyl oder Methoxy substituiertem Anilin ableitet, und

$R^1$ Wasserstoff oder Methyl bedeuten und

m, $R^2$ und $R^3$ jeweils die obengenannte Bedeutung besitzen.

Besonders bevorzugt ist eine Aufzeichnungsflüssigkeit, die Farbstoffe der Formel Ia enthält, in der $D^1$ und $D^2$ sich jeweils von unsubstituiertem Anilin ableiten.

Die Farbstoffe der Formel I sind größtenteils bekannt und beispielsweise in der DE-A-2 915 323 oder DE-A-3 114 088 beschrieben oder sie können nach den dort (loc.cit.) aufgeführten Methoden erhalten werden.

Die erfindungsgemäße Aufzeichnungsflüssigkeit für das Ink-Jet-Verfahren enthält einen oder mehrere Farbstoffe der Formel I und ein mit Wasser mischbares organisches Lösungsmittel.

Mit Wasser mischbare organische Lösungsmittel sind z.B. $C_1$-$C_4$-Alkanole, wie Methanol, Ethanol, Propanol, Isopropanol, Butanol, Isobutanol, sec-Butanol oder tert-Butanol, Carbonsäureamide, wie N,N-Dimethylformamid oder N,N-Dimethylacetamid, Lactame, wie N-Methylpyrrolid-2-on, cyclische Harnstoffe, wie 1,3-Dimethylimidazolidin-2-on, Ketone oder Ketoalkohole, wie Aceton, Methylethylketon oder 2-Methyl-2-hydroxypentan-4-on, Ether, wie Tetrahydrofuran oder Dioxan, Mono-, Di- oder Polyalkylenglykole oder -thioglykole, die $C_2$-$C_6$-Alkyleneinheiten aufweisen, wie Ethylenglykol, 1,2- oder 1,3-Propylenglykol, 1,2- oder 1,4-Butylenglykol, 1,6-Hexylenglykol, Diethylenglykol, Triethylenglykol, Thiodiglykol, Polyethylenglykol oder Polypropylenglykol, andere Polyole, wie Glycerin oder Hexan-1,2,6-triol, $C_1$-$C_4$-Alkylether von mehrwertigen Alkoholen, wie Ethylenglykolmonomethyl- oder -monoethylether, Diethylenglykolmonomethyl- oder -monoethylether oder Triethylenglykolmonomethyl- oder -monoethylether oder Dimethylsulfoxid.

Mit Wasser mischbare organische Lösungsmittel, die bevorzugt sind, sind beispielsweise N-Methylpyrrolidin-2-on, Mono-, Di- oder Trialkylenglykole, die $C_2$-$C_6$-Alkyleneinheiten aufweisen, insbesondere Mono-, Di- oder Triethylenglykol, oder Dimethylsulfoxid. Ganz besonders hervorzuheben sind N-Methylpyrrolidin-2-on, Diethylenglykol oder Dimethylsulfoxid.

Der Anteil des Farbstoffs der Formel I liegt in der Regel bei 2 bis 10 Gew.-%, vorzugsweise 3 bis 5 Gew.-%, jeweils bezogen auf das Gesamtgewicht der Aufzeichnungsflüssigkeit.

Bevorzugt ist eine Aufzeichnungsflüssigkeit, die neben dem Farbstoff der Formel I und einem mit Wasser mischbaren organischen Lösungsmittel zusätzlich noch Wasser enthält.

In diesem Fall enthält die erfindungsgemäße Aufzeichnungsflüssigkeit für das Ink-Jet-Verfahren im allgemeinen 50 bis 95 Gew.% und insbesondere 70 bis 95 Gew.-%, jeweils bezogen auf das Gesamtgewicht des Lösungsmittelsystems, an Wasser.

Die neue Aufzeichnungsflüssigkeit kann weiterhin Hilfsmittel, beispielsweise Mittel zur Beeinflussung der Viskosität, wie Polyvinylchlorid oder Cellulosederivate, Tenside (nichtionisch, anionisch oder kationisch) oder Puffersysteme enthalten.

Die folgenden Beispiele sollen die Erfindung näher erläutern.

Allgemeine Herstellvorschrift für eine Aufzeichnungsflüssigkeit

3,5 bis 5 Gew.-Teile eines Farbstoffs, der nach dem an sich bekannten Verfahren der umgekehrten Osmose von Elektrolyten befreit worden ist, werden in 95 bis 96,5 Gew.-Teilen einer Flüssigkeit gelöst, deren Zusammensetzung in den nachfolgenden Beispielen angegeben ist. Die Lösung wird unter Druck durch ein Teflon-Filter der Porengröße 1 µm filtriert und danach unter vermindertem Druck entgast.

Mit dieser Aufzeichnungsflüssigkeit wird das Aufnahmegefäß eines Tintenstrahl-Druckkopfes gefüllt, der unter dem Einfluß von zugeführter Wärme die Tinte tröpfchenförmig auswirft. Mit diesem Thermo-Ink-Jet-Druckkopf wird ein handelsübliches Papier, wie es für Maschinenschriften verwendet wird, bedruckt.

Die Abriebechtheit des erhaltenen Schriftbildes wird nach zwei Methoden geprüft:

Methode 1:

Überstreichen der Schrift mit einem handelsüblichen Text-Marker.

Methode 2:

Reiben einer beschriebenen Stelle mit einem angefeuchteten Finger.

Die Echtheit des Schriftbildes wird im Rahmen einer von 5 bis 1 reichenden Skala bewertet, wobei 5 bedeutet, daß kein Ausbluten erfolgt, und 1 bedeutet, daß das Schriftbild so stark verschmiert, daß es nicht mehr erkennbar ist.

Zur Herstellung der Tinten wurden die in der Tabelle 1 beschriebenen Farbstoffe der Formel

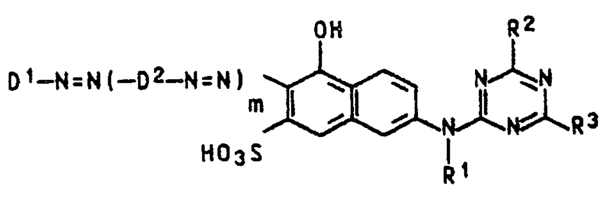

verwendet.

| Farbstoff Nr. | $R_1$ | m | $D_1$ | $D_2$ | $R^2 = R^3$ | Farbe |
|---|---|---|---|---|---|---|
| 1 | H | 0 | 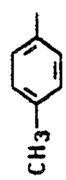 | – | $-NH-C_3H_6-N(C_2H_5)_2$ | orange |
| 2 | H | 0 | 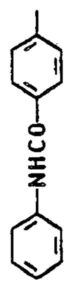 | – | $-NH-C_3H_6-N(CH_3)_2$ | orange |
| 3 | H | 0 | 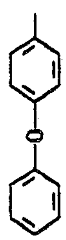 | – | $-NH-C_3H_{63}N(CH_3)_2$ | scharlach |
| 4 | H | 1 | 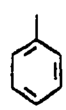 | 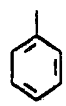 | $-NH-C_3H_6-N(C_2H_5)_2$ | rot |
| 5 | H | 1 | 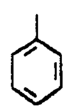 | 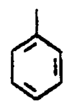 | $-NH-C_2H_4-N(C_2H_5)_2$ | rot |
| 6 | H | 1 | 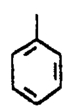 | 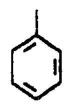 | 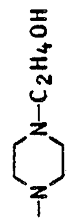 | rot |
| 7 | H | 1 | 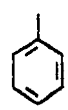 | 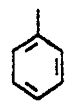 | 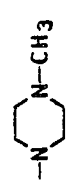 | rot |
| 8 | H | 1 | 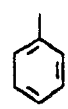 | 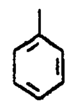 | 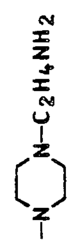 | rot |

Die Farbstoffe 1, 2, 3, 4 und 5 wurden dabei gemäß den Beispielen 94, 95, 84, 98 und 100 der DE-A-2 915 323 und die Farbstoffe 6 und 7 gemäß Beispiel 2 der DE-A-3 114 088 hergestellt.

Der Farbstoff 8 wurde analog Beispiel 2 der DE-A-3 114 088 hergestellt.

Die Zusammensetzung der Tinten sowie die Bewertung der Abriebechtheit des Schriftbildes gehen aus der Tabelle 2 hervor. Die wassermischbaren Lösungsmittel (Diethylenglykol oder eine Mischung aus Diethylenglykol und N-Methylpyrrolidin-2-on) sind mit DEG und NMP abgekürzt. W steht für Wasser).

Tabelle 2

| Anwendungsbeispiel Nr. | Farbstoff Nr. | Anteil des Farbstoffs an der Aufzeichnungsflüssigkeit [Gew.%] | Zusammensetzung des Lösungsmittelsystems [Gew.Teile] | Farbe | Echtheit | |
|---|---|---|---|---|---|---|
| | | | | | Methode 1 | Methode 2 |
| 1 | 1 | 5,0 | W : DEG = 9 : 1 | orange | 4 | 3-4 |
| 2 | 2 | 4,0 | W : DEG : NMP = 7 : 2 : 1 | orange | 4 | 4 |
| 3 | 3 | 4,5 | W : DEG = 9 : 1 | scharlach | 3-4 | 3 |
| 4 | 4 | 3,5 | W : DEG = 9 : 1 | rot | 3 | 3-4 |
| 5 | 5 | 3,5 | W : DEG : NMP = 7 : 2 : 1 | rot | 3 | 3-4 |
| 6 | 6 | 4,0 | W : DEG = 9 : 1 | rot | 3-4 | 3 |
| 7 | 7 | 4,0 | W : DEG = 9 : 1 | rot | 4 | 3-4 |
| 8 | 8 | 4,5 | W : DEG = 9 : 1 | rot | 3-4 | 3-4 |

## Ansprüche

1. Aufzeichnungsflüssigkeit für das Ink-Jet-Verfahren, enthaltend Farbstoff und ein mit Wasser mischbares organisches Lösungsmittel, dadurch gekennzeichnet, daß sie einen Farbstoff der Formel I

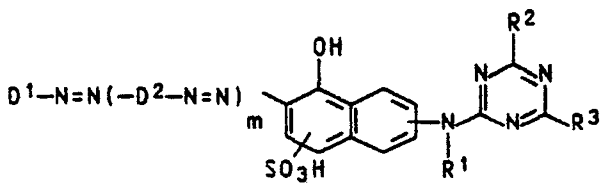

(I)

enthält, in der
m 0 oder 1,
$D^1$ und $D^2$ gleich oder verschieden sind und unabhängig voneinander jeweils den Rest einer Diazokomponente, die sich von gegebenenfalls durch $C_1$-$C_4$-Alkyl, $C_1$-$C_4$-Alkoxy, Phenoxy, Halogen, Nitro, Cyano oder Phenylcarbamoyl substituiertem Anilin ableitet,
$R^1$ Wasserstoff oder $C_1$-$C_4$-Alkyl und
$R^2$ und $R^3$ gleich oder verschieden sind jeweils unabhängig voneinander jeweils einen Rest der Formel II oder III

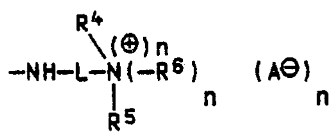

(II)

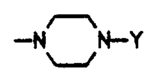

(III)

bedeuten, wobei $A^\ominus$ für ein Anion, L für $C_2$-$C_6$-Alkylen, das gegebenenfalls durch Sauerstoff, Imino oder $C_1$-$C_4$-Alkylimino unterbrochen ist, n für 0 oder 1, $R^4$, $R^5$ und $R^6$ gleich oder verschieden sind und unabhängig voneinander jeweils für Wasserstoff oder $C_1$-$C_4$-Alkyl, das gegebenenfalls durch Hydroxy substituiert ist, oder $R^4$ und $R^5$ zusammen mit dem sie verbindenden Stickstoffatom für Pyrrolidino, Piperidino, Morpholino, Piperazino oder N-($C_1$-$C_4$-Alkyl)piperazino, und Y für Wasserstoff, $C_1$-$C_4$-Alkyl, das gegebenenfalls durch Hydroxy substituiert ist, oder den Rest

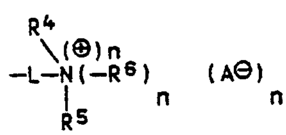

stehen, wobei n, $R^4$, $R^5$, $R^6$ und $A^\ominus$ jeweils die obengenannte Bedeutung besitzen.

2. Aufzeichnungsflüssigkeit gemäß Anspruch 1, dadurch gekennzeichnet, daß sie einen Farbstoff der Formel Ia

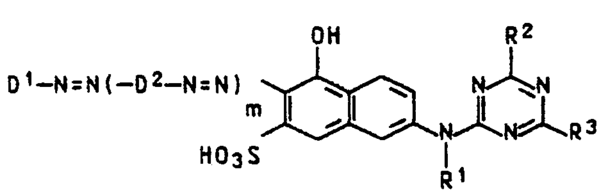

(Ia)

enthält, in der
$D^1$ und $D^2$ gleich oder verschieden sind und jeweils unabhängig voneinander den Rest einer Diazokomponente, die sich von gegebenenfalls durch Methyl oder Methoxy substituiertem Anilin ableitet,

und

$R^1$ Wasserstoff oder Methyl bedeuten und

m, $R^2$ und $R^3$ jeweils die in Anspruch 1 genannte Bedeutung besitzen.

3. Aufzeichnungsflüssigkeit gemäß Anspruch 1, dadurch gekennzeichnet, daß sie zusätzlich Wasser enthält.